# DEMANDE DE BREVET EUROPEEN

(11) **EP 1 759 963 A1**
(43) Date de publication de la demande: **07.03.2007**
(21) Numéro de dépôt: 06291397.5
(22) Date de dépôt: 04.09.2006
(51) Int. Cl.: B62D 25/20, B62D 27/02

(54) **Caisse en blanc de véhicule automobile**

(30) Priorité: 02.09.2005 FR 0509020
(71) Demandeur: Compagnie Plastic Omnium, 69007 Lyon (FR)
(72) Inventeur: Andre, Gérald, 01500 Amberieu en Bugey (FR); Delavalle, Dominique, 01160 Pont d'Ain (FR); Fillon, Jérôme, 69003 Lyon (FR)
(74) Mandataire: Remy, Vincent Noel Paul

(57) **Abrégé**

L'invention concerne une caisse en blanc de véhicule automobile comprenant deux bas de caisse latéraux (16a, 16b) prolongés vers l'arrière par des longerons (18a, 18b), les bas de caisse (16a, 16b) définissant un plan avant sensiblement horizontal et les longerons (18a, 18b) définissant un plan arrière sensiblement horizontal surélevé par rapport au plan avant, les bas de caisse (16a, 16b) et les longerons (18a, 18b) étant reliés par des portions de structure définissant un plan incliné. comportant une interface de liaison (26) s'étendant sous les longerons (18a, 18b) et sous les portions de structure (19a, 19b), cette interface de liaison (26) étant apte à accueillir un plancher arrière rapporté avec interposition d'un joint d'amortissement.

## Description

La présente invention concerne une caisse en blanc d'un véhicule automobile.

En général, un véhicule automobile comprend une structure métallique, couramment désignée « caisse en blanc », formant une armature rigide du véhicule, destinée à supporter différents organes, notamment les ouvrants, le groupe motopropulseur, les essieux, les pièces de carrosserie, l'habillage intérieur, etc.

Cette structure comprend différents éléments métalliques et notamment une partie inférieure que l'on désigne châssis.

On appelle bas de caisses les parties latérales du châssis s'étendant entre les espaces prévus pour les roues avant et arrière du véhicule.

Dans sa partie située en arrière des sièges avant de l'habitacle, les bas de caisse latéraux sont prolongés par des longerons et des traverses s'étendent perpendiculairement aux bas de caisse et aux longerons.

Généralement, un plancher métallique, soudé aux longerons et aux traverses et formant le fond de l'habitacle, fait également partie intégrante du châssis.

On connaît également, d'après la publication EP 0 433 903, une caisse en blanc de véhicule automobile comprenant une ouverture dans sa partie centrale et une interface de liaison au niveau des bas de caisse, destinée à accueillir un plancher avant rapporté.

Or, rapporter un plancher arrière s'étendant entre les longerons du véhicule automobile pourrait également être économique, de nombreux éléments fonctionnels du véhicule automobile étant situés à l'arrière du véhicule pouvant alors être intégrés au plancher et montés avec celui-ci.

Les inventeurs à la base de l'invention ont toutefois remarqué que, dans le cas d'une caisse en blanc avec un plancher arrière rapporté, le plancher était soumis, lors d'un choc frontal, à des forces de traction de direction sensiblement perpendiculaire au pare-brise, en raison des efforts exercés par les éléments fonctionnels du véhicule portés par le plancher, comme le réservoir ou les ceintures de sécurité arrière. Un effort de cisaillement s'exerce donc sur les fixations du plancher à la caisse en blanc, de sorte que le plancher peut glisser vers l'avant du véhicule.

Il existe donc un besoin pour une caisse en blanc apte à intégrer un plancher arrière rapporté, le plancher arrière étant fixé de façon sûre à la caisse en blanc.

L'invention vise à répondre à ce besoin et a pour objet une caisse en blanc de véhicule automobile comprenant deux bas de caisse latéraux prolongés vers l'arrière par des longerons, les bas de caisse définissant un plan avant sensiblement horizontal et les longerons définissant un plan arrière sensiblement horizontal surélevé par rapport au plan avant, les bas de caisse et les longerons étant reliés par des portions de structure définissant un plan incliné, **caractérisée en ce qu**'elle comporte une interface de liaison s'étendant sous les longerons et au moins partiellement sous les portions de structure, cette interface étant apte à accueillir un plancher arrière rapporté.

Grâce à l'invention, lors d'un choc frontal, le plancher est retenu vers l'avant par les portions de structure, contre lesquelles il prend appui. Les portions de structure, inclinées sensiblement perpendiculairement aux forces de traction exercées par les éléments fonctionnels du plancher, exercent en effet sur le plancher une force de réaction opposée à ces forces de traction et évitent de soumettre les fixations du plancher à la caisse en blanc à un effort de cisaillement.

En outre, la caisse en blanc est soumise à une étape de traitement de surface au cours de laquelle elle est nettoyée puis immergée dans différents bains, dont la cataphorèse, qui a pour fonction de la protéger de la corrosion.

La caisse en blanc selon l'invention étant ouverte et ne comportant pas de plancher métallique, la surface à traiter est réduite. Cela permet donc de réduire la quantité de produit à utiliser, et, ainsi, de diminuer les coûts liés à cette étape de traitement de manière significative, par exemple lors des sous-étapes de cataphorèse ou de blaxonnage.

De plus, lors de l'immersion de la caisse dans les bains de traitement, les ouvertures ménagées dans celle-ci permettent d'augmenter la vitesse d'évacuation du produit et, ainsi, permettent de réaliser un gain de productivité.

En outre, la caisse en blanc selon l'invention procure d'autres avantages, parmi lesquels on peut citer :
- accessibilité facilitée pour le soudage des traverses et des longerons, due à l'absence de plancher, et diminution de la longueur des pinces de soudage ;
- étanchéité de la liaison entre le plancher et la caisse, apportée par le joint, grâce à l'interface de liaison prévue sur la caisse en blanc, notamment sous les longerons.

Dans un mode de réalisation particulier, l'interface de liaison est continue et le plancher arrière est rapporté à la caisse avec interposition d'un joint d'amortissement.

La caisse en blanc selon l'invention présente l'avantage d'être munie de moyens adaptés pour intégrer un plancher rapporté isolé mécaniquement et fixé par l'intermédiaire d'un joint à la caisse en blanc. Le joint atténue les vibrations transmises au plancher et, de ce fait, à l'habitacle du véhicule. Le rayonnement acoustique dû aux vibrations est donc diminué.

Dans ce cas, grâce à l'invention, le matériau utilisé pour le joint d'amortissement peut être choisi en fonction de ses seules propriétés d'atténuation des vibrations sans tenir compte de sa résistance au cisaillement. Il en résulte une meilleure efficacité du joint et corrélativement, un prix de revient inférieur du matériau le constituant.

Optionnellement, l'interface de liaison est une piste de collage.

Selon un mode de réalisation particulier, l'interface de liaison de la caisse en blanc selon l'invention s'étend également sous le tablier du véhicule, séparant l'habitacle du compartiment moteur.

Selon un mode de réalisation particulier, l'interface de liaison de la caisse en blanc selon l'invention s'étend également sous la traverse de plancher avant située au niveau de l'arrière des sièges avant du véhicule.

De façon optionnelle, l'interface de liaison de la caisse en blanc selon l'invention s'étend également sous la jupe arrière, située à l'extrémité arrière du véhicule.

L'invention sera mieux comprise à la lecture de la description qui va suivre, donnée uniquement à titre d'exemple et faite en se référant aux dessins dans lesquels :
- la figure 1 est une vue de 3/4 de dessus d'une caisse en blanc selon un mode de réalisation de l'invention ;
- la figure 2 est une vue de 3/4 de dessous du bloc arrière de la caisse en blanc de la figure 1.

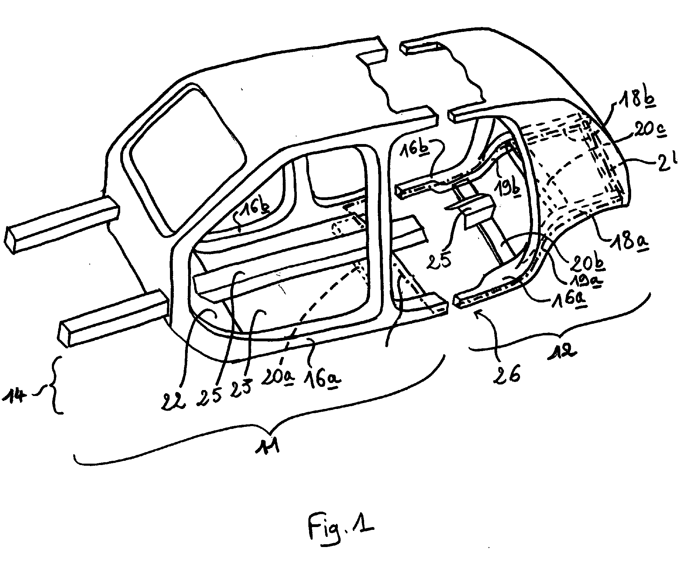

La figure 1 illustre un exemple de caisse en blanc d'un véhicule automobile. Cette caisse en blanc est constituée de deux blocs (bloc avant 11 et bloc arrière 12), destinés à être assemblés et comporte des parties latérales et une partie inférieure 14.

La partie inférieure 14 de la caisse en blanc est composée de deux bas de caisses latéraux 16a et 16b, définissant un plan avant sensiblement horizontal et prolongés par des longerons 18a et 18b, définissant un plan arrière sensiblement horizontal surélevé par rapport au plan avant. Les longerons et les bas de caisse sont reliés entre eux par des portions de structure 19a, 19b définissant un plan incliné. Une traverse de plancher avant 20a, s'étend transversalement entre les bas de caisse 16a, 16b et des traverses 20b (traverse de planche à talon) et 20c s'étendent entre les longerons 18a, 18b.

La partie inférieure 14 de la caisse en blanc comporte également un tablier 22, séparant le compartiment moteur de l'habitacle du véhicule, et une jupe arrière 24, située à l'extrémité arrière du véhicule.

Le bloc avant 11 de cette caisse en blanc comporte également un plancher avant 23. Le bloc arrière 12, ainsi que le bloc avant 11 dans sa partie arrière, est toutefois ouvert et ne comporte pas de plancher arrière soudé à la partie arrière des bas de caisse 16a, 16b, aux longerons 18a, 18b, aux portions de structure 19a, 19b et aux traverses 20b, 20c.

La caisse en blanc comporte également un tunnel 25 en deux parties, agencées respectivement sur les blocs avant 11 et arrière 12 et destinées à s'assembler.

Ce sont donc les traverses 20a, 20b, 20c et le plancher avant 23 qui contribuent à la rigidité de la caisse en blanc, ce qui pourrait entraîner un défaut de rigidité de ladite caisse. Toutefois, ce défaut de rigidité peut être compensé par une soudure plus efficace des traverses 20a, 20b, 20c aux longerons 18a, 18b, les liaisons étant plus accessibles du fait de l'absence de plancher au moment de l'assemblage, et également par une optimisation du dimensionnement des traverses 20a, 20b, 20c, à la portée de l'homme du métier. En outre, dans le véhicule fini, ce défaut de rigidité est aussi compensé par un plancher arrière rapporté (non représenté sur les figures) à la caisse en blanc.

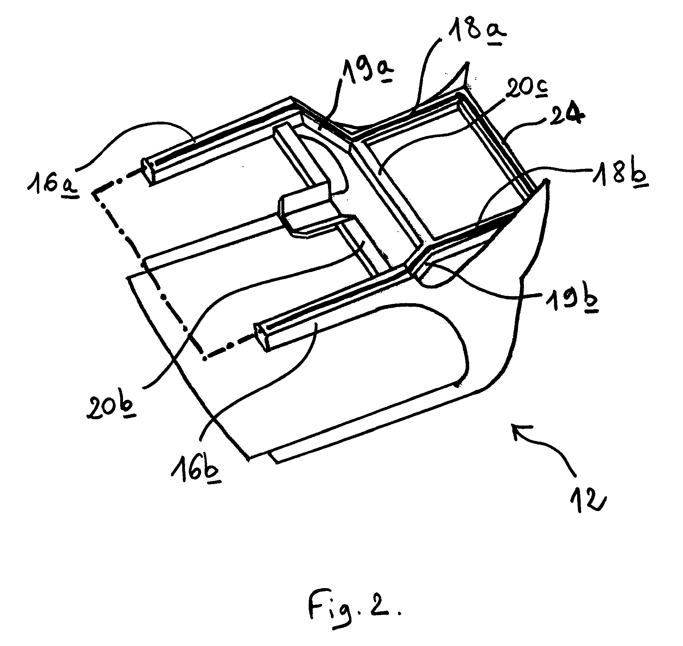

Sur la figure 2, on voit une interface de liaison 26 constituée par une piste de collage qui s'étend, dans la configuration décrite, sous le bloc arrière 12, notamment sous les longerons 18a, 18b, sous les portions de structure 19a, 19b et sous la partie arrière des bas de caisses 16a, 16b. L'interface 26 s'étend également sous la traverse de plancher avant 20a (non représentée sur la figure 2) du bloc avant 11 et sous la jupe arrière 24.

Ainsi, lorsque les blocs avant 11 et arrière 12 du véhicule sont assemblés, cette interface de liaison 26 est continue, ce qui permet une meilleure fixation du plancher rapporté par l'intermédiaire d'un joint d'amortissement (non représenté sur les figures), prenant place par collage sous la piste 26. Le joint d'amortissement fixé par collage à l'interface de liaison 26 permet une meilleure isolation de l'habitacle vis-à-vis des vibrations de la caisse.

De même, cette caisse en blanc est conformée pour comporter sous ses longerons 18a, 18b, bas de caisse 16a, 16b, traverse de plancher avant 20a et jupe arrière 24 une surface plane d'au moins 20mm de large formant la piste de collage 26 de manière à permettre une fixation solide du joint d'amortissement et du plancher rapporté à la caisse.

La fixation du plancher rapporté peut également être consolidée par vissage de celui-ci aux bas de caisse 16a, 16b, longerons 18a, 18b et traverses 20a, 20b et 20c.

L'étanchéité de la liaison de la caisse en blanc avec le plancher et ainsi l'étanchéité entre l'intérieur et l'extérieur du véhicule est également assurée par le joint d'amortissement.

Il est bien entendu que l'invention n'est pas limitée au mode de réalisation précédemment décrit : l'interface de liaison 26 peut notamment s'étendre sous toute la longueur des bas de caisse 16a, 16b et sous le tablier 22.

En variante, la caisse en blanc selon l'invention peut également ne pas comporter de jupe arrière 24. En effet, celle-ci peut être directement intégrée au plancher rapporté. La caisse en blanc peut également comporter un seul bloc.

## Revendications

1. Caisse en blanc de véhicule automobile comprenant deux bas de caisse latéraux (16a, 16b) prolongés vers l'arrière par des longerons (18a, 18b), les bas de caisse (16a, 16b) définissant un plan avant sensiblement horizontal et les longerons (18a, 18b) définissant un plan arrière sensiblement horizontal surélevé par rapport au plan avant, les bas de caisse (16a, 16b) et les longerons (18a, 18b) étant reliés par des portions de structure (19a, 19b) définissant un plan incliné, **caractérisée en ce qu'**elle comporte une interface de liaison (26) s'étendant sous les longerons (18a, 18b) et sous les portions de structure (19a, 19b), cette interface de liaison (26) étant apte à accueillir un plancher arrière rapporté.

2. Caisse en blanc de véhicule automobile selon la revendication 1, dans laquelle l'interface de liaison (26) est continue et le plancher est rapporté à la caisse avec interposition d'un joint d'amortissement.

3. Caisse en blanc de véhicule automobile selon l'une quelconque des revendications précédentes, dans laquelle l'interface de liaison (26) est une piste de collage.

4. Caisse en blanc de véhicule automobile selon l'une quelconque des revendications précédentes, dans laquelle l'interface de liaison (26) s'étend sous le tablier (22) du véhicule automobile.

5. Caisse en blanc de véhicule automobile selon l'une quelconque des revendications 1 à 3, dans laquelle l'interface de liaison (26) s'étend sous la traverse de plancher avant (20a).

6. Caisse en blanc de véhicule automobile selon l'une quelconque des revendications précédentes, dans laquelle l'interface de liaison (26) s'étend sous la jupe arrière (24).
